# EUROPÄISCHE PATENTSCHRIFT

(11) **EP 0 980 782 B1**
(45) Veröffentlichungstag und Bekanntmachung des Hinweises auf die Patenterteilung: **04.06.2003**
(21) Anmeldenummer: 99112678.0
(22) Anmeldetag: 02.07.1999
(51) Int. Cl.: B60K 35/00

(54) **Vorrichtung zur Steuerung der Wiedergabe eines auf einem Fahrzeug-Bildschirm dargestellten Bildes**
Arrangement for controlling the display of an image on a vehicle screen
Dispositif pour commander l'affichage d'une image reproduite sur l'écran d'un véhicule

(30) Priorität: 19.08.1998 DE 19837510
(43) Veröffentlichungstag der Anmeldung: 23.02.2000
(73) Patentinhaber: Bayerische Motoren Werke Aktiengesellschaft, 80788 München (DE)
(72) Erfinder: Künzner, Hermann, 85356 Freising (DE)

(56) Entgegenhaltungen:
- EP-A- 0 366 132
- EP-A- 0 740 281
- EP-A- 0 796 766

## Beschreibung

Die Erfindung bezieht sich auf eine Vorrichtung zur Steuerung der Wiedergabe eines auf einem Bildschirm dargestellten Bildes gemäß dem Oberbegriff des Anspruchs 1, wie sie aus der EP-A-796 766 bekannt ist. Bei dem Bild handelt es sich beispielsweise um einen Straßenkartenausschnitt. Derartige Vorrichtungen werden bei Fahrzeugen und dort insbesondere bei Navigationssystemen verwendet. Unter einem Navigationssystem ist ein System zu verstehen, das für den jeweiligen Standort des Fahrzeugs bei Kenntnis des Zielorts die optimale Fahrtroute selbsttätig berechnet und durch entsprechende optische und/oder akustische Hinweise hilft, ohne die Verwendung konventionellen Kartenmaterials den Zielort anzufahren.

Derartige bildschirmbasierte Navigationssysteme erfordern häufig eine Veränderung des dargestellten Kartenausschnitts, z. B. um einen geographischen Punkt als Ziel zu erkennen bzw. ggf. auch zu markieren. Dazu kann entweder das Fenster, das den auf dem Bildschirm als Ganzes oder teilweise wiedergegebenen Kartenausschnitt bestimmt, verschoben werden. Die Karte wird dabei gewissermaßen "unter dem Bildschirm verschoben". Auch kann es erforderlich sein, den Kartenmaßstab zu verändern, beispielsweise um einen gewünschten Ort besser oder innerhalb der geographischen Umgebung besser erkennen zu können. Bei bekannten Navigationssystemen sind die Verschiebung des Fenster und die Veränderung des Kartenmaßstabs getrennte Funktionen, die über separate Tasten, ggf. auch menügesteuert, einstellbar sind.

Dadurch entstehen lange Blickzuwendungs- und Betätigungszeiten. Die Verwendung von Tasten erfordert ein Umgreifen. Ferner beanspruchen Tasten einen erheblichen Platz. Die Verwendung einer Menüsteuerung erfordert zur Realisierung der beiden Funktionen den Wechsel zwischen verschiedenen Modi.

Eine weitere Anwendung der Erfindung kann bei einer bildschirmgestützten Bedienungsanleitung erfolgen, wie sie als solche aus der DE 4410985 A bekannt ist. Dabei kann es notwendig sein, die Bedien- oder Funktionshinweise für ein Funktionselement, beispielsweise einen Schalter möglichst rasch und komfortabel auf dem Bildschirm dargestellt zu erhalten.

Der Erfindung liegt die Aufgabe zugrunde, eine Vorrichtung der eingangs genannten Art zu schaffen, mit der auf einfache und schnelle Weise sowohl die Verschiebung des Fensters auf dem, Bild Karte als auch die Größe des durch das Fenster markierten Bildausschnitts veränderbar sind.

Die Erfindung löst diese Aufgabe durch die Merkmale des Patentanspruchs 1.

Die translatorische Bewegung des Stellglieds verschiebt beim Anwendungsfall eines als Bild dargestellten Kartenausschnitts die Lage des Rahmens innerhalb des Kartenausschnitts, die Drehbewegung verändert die Größe des Kartenausschnitts.

In den weiteren Patentansprüche 2 bis 7 sind vorteilhafte Ausgestaltungen der Erfindung beschrieben. Diese Ausgestaltungen beziehen sich sowohl auf die Bewegungsmöglichkeit des Stellglieds, als auch auf die damit verbundenen Veränderungen der dargestellten Bilder bzw. Bildausschnitte. Die Patentausschnitte 8 bis 10 beschreiben die bereits genannten Anwendungsfälle. Die Patentansprüche 10 und 11 ermöglichen zusätzlich zu der optischen Auswahl, wie sie in den Patentansprüchen 1 ff. beschrieben ist, auch eine funktionelle Auswahl. Die Patentansprüche 12 bis 14 schließlich konkretisieren diese besondere Auswahl. Sie enthalten als Ausführungsform die Möglichkeit, durch entsprechende Veränderung des Kartenausschnitts einen Ort zu fixieren und in einem Navigationssystem zu verarbeiten.

Anhand der Zeichnung ist die Erfindung weiter erläutert. Es zeigt
- Fig. 1: eine auf einem Bildschirm dargestellte Straßenkarte und ein zugehöriges Stellglied in der Draufsicht
- Fig. 2: die bei einer translatorischen Bewegung des Stellglieds durchgeführte Bewegung eines Fenster innerhalb der Straßenkarte
- Fig. 3: eine Maßstabsänderung durch eine Drehbewegung des Stellglieds.

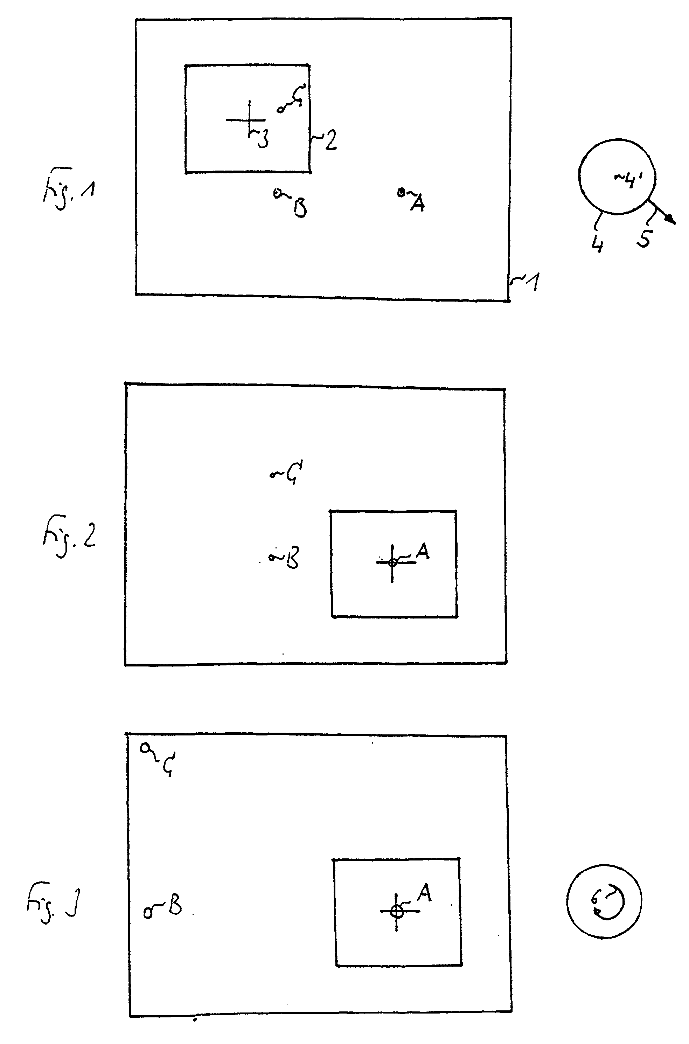

Bei einem nicht in seinen Einzelheiten dargestellten Navigationssystem für ein Fahrzeug befindet sich in einem Bildschirm 1 ein Kartenausschnitt, der durch drei Markierungen (z. B. Orte A, B, C) symbolisiert ist. Ferner befindet sich innerhalb des Bildschirms ein Rahmen 2 mit einem zentralen Fadenkreuz 3. Mit Hilfe eines manuell bedienbaren Eingabeelements 4 läßt sich der wiedergegebene Kartenausschnitt hinsichtlich seiner Position innerhalb einer Übersichtskarte und in seinem Maßstab steuern. Dies soll anhand der Fig. 2 und 3 erläutert werden.

Es sei angenommen, daß die Markierung A von besonderem Interesse für den Fahrzeugbenutzer ist. Sie soll beispielsweise als Start- oder Zielort für eine vorzugebende Fahrtroute dienen. Ausgehend von der Lage des Rahmens 2, wie sie in Fig. 1 dargestellt ist, läßt sich der Rahmen 2 nun im Bild nach rechts unten verfahren. Das Bedienelement 4 ist, wie an sich aus der EP-B-366 132 bekannt, um seine Achse 4' drehbar, es ist ferner in axialer Richtung reversibel bewegbar und besitzt darüber hinaus zwei translatorische Freiheitsgrade, d. h. es ist waagerecht und senkrecht zur Achse 4' bewegbar bzw. neigbar.

Durch die Translationsbewegung des Bedienelements 4 in Richtung des in Fig. 1 gezeigten Pfeiles 5 wird der Rahmen 2 auf dem Bildschirm 1 in der Richtung des Pfeiles 5 bewegt. Das Fadenkreuz 3 markiert, wie in Fig. 2 dargestellt, den Punkt A. Sofern sich der gesuchte Punkt nicht auf dem Bildschirm 1 befindet, ist es möglich, diesen Punkt auf dem Bildschirm wiederzugeben. Hierzu ist der Rahmen 2 durch die Translationsbewegung des Bedienelements 4 gesteuert, zunächst bis zum Rand des Bildschirms 1 verfahrbar. Der Bildausschnitt bleibt zunächst unverändert. Bleibt das Bedienelement weiterhin wie dargestellt translatorisch ausgelenkt, so befindet sich der Rahmen 2 quasi an seinem Anschlag. Nunmehr wird der Bildschirmausschnitt in der zur Richtung des Pfeils 5 entgegengesetzten Richtung bewegt. Damit werden nacheinander Kartenausschnitte auf dem Bildschirm 1 dargestellt, die sich in der Übersichtskarte quasi rechts unten befinden.

Ausgehend von der in Fig. 2 dargestellten Situation ist es nunmehr möglich, den Bildpunkt A in vergrößertem Maßstab darzustellen. Hierzu wird das Bedienelement 4 um seine Achse gedreht (Pfeil 6). Dadurch wird der Maßstab vergrößert bzw. bei entgegengesetzter Drehbewegung auch verkleinert. Bei der Vergrößerung des Maßstabs wird nunmehr der Bildpunkt A vergrößert dargestellt. Da sich insgesamt der Maßstab ändert, befinden sich die Punkte B und C entsprechend weit voneinander und von Punkt A entfernt.

Der Bildpunkt A kann beispielsweise als Endpunkt einer Fahrtroute in das Navigationssystem eingegeben werden, indem das Bedienelement 4 axial bewegt wird. Der Bildpunkt A wird ohne zusätzliche Maßnahme dann verwendet, um die Reiseroute zu berechnen.

Handelt es sich bei dem auf dem Bildschirm 1 dargestellten Bild nicht um eine Karte, sondern um beispielsweise eine Aufnahme des Innenraums des Fahrzeugs, so kann eine Einzelheit, hier wiederum A, durch eine entsprechende Bewegung des Rahmens 2 ausgewählt werden. Befindet sich die Einzelheit an der durch das Fadenkreuz 3 markierten Stelle, kann beispielsweise eine Bedienungsanleitung für den durch A markierten Bedienschalter nach Axialbewegung des Bedienelements 4 auf dem Bildschirm 1 wiedergegeben werden. Die Wiedergabe kann beispielsweise in einem eingeblendeten Fenster oder anstelle des zunächst auf dem Bildschirm 1 dargestellten Innenraumbildes dargestellt werden. Auch hier ist es möglich, den Maßstab der Darstellung durch Rotationsbewegung des Bedienelements 4 zu verändern.

Durch die Erfindung ist es möglich, ohne Wechsel zwischen verschiedenen Eingabemodi sehr schnell und intuitiv ein Ziel bzw. einen markanten Bildpunkt zu identifizieren und auszuwählen. Die gesamte Manipulation erfolgt mit einem einzigen Bedienelement ohne zeitaufwendigen Wechsel von Bedienelementen.

## Patentansprüche

1. Vorrichtung zur Steuerung der Wiedergabe eines auf einem Fahrzeug-Bildschirm wiedergegebenen Bildes, und umfassend einen Bildschirm, ein Stellglied, das um eine Längsachse drehbar und quer zur Längsachse auslenkbar ist, **gekennzeichnet durch** ein auf dem Bildschirm dargestelltes Fenster, das kleiner als die Abmessungen des Bildschirms ist und eine Bildeinzelheit markiert, wobei **durch** die Drehbewegung des Stellglieds die Größe der im Fenster angezeigten Bildeinzelheit und **durch** die Querbewegung des Stellglieds die Lage des Fensters innerhalb des Bildschirms einstellbar ist.

2. Vorrichtung nach Anspruch 1, **dadurch gekennzeichnet, daß** die Querbewegung des Stellglieds reversibel bzgl. einer Mittellage erfolgt.

3. Vorrichtung nach Anspruch 2, **dadurch gekennzeichnet, daß** während der Auslenkung des Stellglieds die Lageänderung mit gleichbleibender Geschwindigkeit vornehmbar ist.

4. Vorrichtung nach einem der Ansprüche 1 bis 3, **dadurch gekennzeichnet, daß** für die Drehbewegung des Stellglieds Raststellungen vorgesehen sind und jeder Raststellung eine Bildeinzelheitsgröße zugeordnet ist.

5. Vorrichtung nach Anspruch 4, **dadurch gekennzeichnet, daß** die Fenstergröße auch bei der Drehbewegung des Stellglieds konstant ist und daß die VergrößerungNerkleinerung der Bildeinzelheit durch eine entsprechende VerkleinerungNergrößerung des Bildmaßstabs erfolgt.

6. Vorrichtung nach einem der Ansprüche 1 bis 5, **dadurch gekennzeichnet, daß** es sich beim Bild um einen Straßenkartenausschnitt und bei der Bildeinzelheit um einen Ort handelt.

7. Vorrichtung nach einem der Ansprüche 1 bis 5, **dadurch gekennzeichnet, daß** es sich beim Bild um die Darstellung des Fahrzeuginnenraums und bei der Bildeinzelheit um ein Funktionselement handelt.

8. Vorrichtung nach einem der Ansprüche 1 bis 7, **dadurch gekennzeichnet, daß** eine Enterfunktion vorgesehen ist, durch die eine im Zentrum des Fensters liegende Bildeinzelheit auswählbar ist.

9. Vorrichtung nach Anspruch 8, **dadurch gekennzeichnet, daß** die Enterfunktion durch eine Axialbewegung des Stellglieds vornehmbar ist.

10. Vorrichtung nach Anspruch 6 und Anspruch 8 oder 9, **dadurch gekennzeichnet, daß** der Ort in ein zugeordnetes Navigationssystem übernehmbar ist.
11 Vorrichtung nach Anspruch 10, **dadurch gekennzeichnet, daß** der Ort gleich Start- oder Zielort einer Fahrtroute ist.
12.Vorrichtung nach Anspruch 7 und Anspruch 8 oder 9, **dadurch gekennzeichnet, daß** durch Ausführen der Enter-Funktion dem Funktionselement zugeordnete Bedien-Hinweise auf dem Bildschirm darstellbar sind.

## Claims

1. A device for controlling the reproduction of image on a screen in a vehicle, comprising a screen and an actuator which can be rotated around a longitudinal axis and deflected at an angle to the longitudinal axis, **characterised by** a window shown on the screen, smaller than the dimensions of the screen and identifying a detail on the screen, wherein the size of the detail of the image shown in the window can be adjusted by rotating the actuator and the position of the window inside the screen can be adjustable by transverse motion of the actuator.

2. A device according to claim 1, **characterised in that** the transverse motion of the actuator is reversible relative to a central position.

3. A device according to claim 2, **characterised in that** during deflection of the actuator, the position can be changed at a uniform speed.

4. A device according to any of claims 1 to 3, **characterised in that** catch positions are provided for the rotary motion of the actuator and each catch position is associated with a size of the detail of the image.

5. A device according to claim 4, **characterised in that** the size of the window is constant during rotation of the actuator and the enlargement or reduction of the detail is obtained by corresponding reduction or enlargement of the image scale.

6. A device according to any of claims 1 to 5, **characterised in that** the image is part of a street map and the detail is a place.

7. A device according to any of claims 1 to 5, **characterised in that** the image is of the interior of the vehicle and the detail is a functional element.

8. A device according to any of claims 1 to 7, **characterised in that** an enter function is provided for selecting a detail of the image in the centre of the window.

9. A device according to claim 8, **characterised in that** the enter function can be performed by axial motion of the actuator.

10. A device according to claim 6 and claims 8 or 9, **characterised in that** the place can be taken over in an associated navigation system.

11. A device according to claim 10, **characterised in that** the place is the starting-place or destination of a car journey.

12. A device according to claim 7 and claim 8 or 9, **characterised in that** operating instructions associated with the functional element can be displayed on the screen by performing the enter function.

## Revendications

1. Dispositif de commande de la reproduction d'une image reproduite sur l'écran d'un véhicule, comprenant un écran et un organe d'actionnement qui peut être tourné autour de son axe longitudinal et être dévié transversalement à l'axe longitudinal,
**caractérisé en ce que**
une fenêtre plus petite que les dimensions de l'écran est représentée sur l'écran et marque un détail de l'image, un mouvement de rotation de l'organe d'actionnement règle la taille du détail de l'image indiqué dans la fenêtre et un mouvement transversal de l'organe d'actionnement règle la position de la fenêtre dans l'écran.

2. Dispositif selon la revendication 1,
**caractérisé en ce que**
le mouvement transversal de l'organe d'actionnement est réversible ou se fait par rapport à une position médiane.

3. Dispositif selon la revendication 2,
**caractérisé en ce que**
pendant le déplacement de l'organe d'actionnement, le changement de position se fait à vitesse constante.

4. Dispositif selon l'une des revendications 1 à 3,
**caractérisé en ce que**
des positions d'encliquetage sont prévues pour le mouvement de rotation de l'organe d'actionnement et chaque position d'encliquetage correspond à une taille d'un détail de l'image.

5. Dispositif selon la revendication 4,
**caractérisé en ce que**
la taille de la fenêtre est constante même pour un mouvement de rotation de l'organe d'actionnement et l'agrandissement/réduction du détail de l'image se fait par une réduction/agrandissement correspondante de l'échelle de l'image.

6. Dispositif selon les revendications 1 à 5,
**caractérisé en ce que**
l'image est un extrait de carte routière et le détail de l'image est une localité.

7. Dispositif selon l'une des revendications 1 à 5,
**caractérisé en ce que**
l'image représente l'intérieur du véhicule et le détail de l'image est un élément fonctionnel.

8. Dispositif selon l'une des revendications 1 à 7,
**caractérisé par**
une fonction d'entrée qui permet de sélectionner un détail d'image situé au centre de la fenêtre.

9. Dispositif selon la revendication 8,
**caractérisé en ce que**
la fonction d'entrée correspond à un mouvement axial de l'organe d'actionnement.

10. Dispositif selon la revendication 6, 8 ou 9,
**caractérisé en ce que**
la localité peut être transférée à un système de navigation correspondant.

11. Dispositif selon la revendication 10,
**caractérisé en ce que**
la localité correspond au point de départ ou à la destination d'un trajet.

12. Dispositif selon la revendication 7, 8 ou 9,
**caractérisé en ce que**
l'exécution de la fonction entrée fait apparaître sur l'écran des indications de commande associées à l'élément fonctionnel.
